# EUROPEAN PATENT APPLICATION

(11) **EP 2 750 342 A2**
(43) Date of publication of application: **02.07.2014**
(21) Application number: 14161170.7
(22) Date of filing: 02.11.2007
(51) Int. Cl.: H04L 12/721, H04L 12/751, H04L 12/761, H04L 12/709, H04L 12/711, H04L 12/723, H04L 12/707

(54) **Engineered paths in a link state protocol controlled ethernet network**

(30) Priority: 02.11.2006 US 856275 P; 03.04.2007 US 732381
(62) Divisional of application: 07824883.8
(71) Applicant: Nortel Networks Limited, St.Laurent, Québec H4S 29A (CA)
(72) Inventor: Allan, David, Ottawa, Ontario K2B 5P9 (CA); Bragg, Nigel, Weston Colville, Cambridgeshire CB1 5NX (GB); Ashwood-Smith, Peter, Hull, Québec J9A 2V8 (CA)
(74) Representative: Mackenzie, Andrew Bryan

(57) **Abstract**

Traffic Engineered (TE) paths may be created over a link state protocol controlled Ethernet network by causing explicit paths to be installed by network elements on the link state protocol controlled Ethernet network and used to forward traffic on the network. The network elements exchange routing information using link state advertisements to enable each node on the network to build a link state database that may be used to determine shortest paths through the network. The shortest paths are used as a default forwarding state for traffic that is not associated with one of the traffic engineered paths. The link state advertisements may also be used to carry the TE path definitions. Where the TE paths are to be used exclusive of other routes, forwarding state for particular service instances may be removed to prevent traffic from traversing the network other than over the TE path.

## Description

### CROSS REFERENCE TO RELATED APPLICATIONS

This application claims the benefit of U.S. Provisional Application No. 60/856,275, filed November 2, 2006, entitled "Combining PLSB and PBT to Produce Engineerable ELAN Service," the content of which is hereby incorporated herein by reference.

### TECHNICAL FIELD

The present invention relates to Ethernet traffic routing protocols, and in particular to a method and apparatus for implementing engineered paths in a link state protocol controlled Ethernet network.

### BACKGROUND

In Ethernet network architectures, devices connected to the network compete for the ability to use shared telecommunications paths at any given time. Where multiple bridges or nodes are used to interconnect network segments, multiple potential paths to the same destination often exist. The benefit of this architecture is that it provides path redundancy between bridges and permits capacity to be added to the network in the form of additional links. However to prevent loops from being formed, a spanning tree was generally used to restrict the manner in which traffic was broadcast on the network. Since routes were learned by broadcasting a frame and waiting for a response, and since both the request and response would follow the spanning tree, most if not all of the traffic would follow the links that were part of the spanning tree. This often led to over-utilization of the links that were on the spanning tree and non-utilization of the links that weren't part of the spanning tree.

To overcome some of the limitations inherent in Ethernet networks, a link state protocol controlled Ethernet network was disclosed in application No. 11/537,775, filed October 2, 2006, entitled "Provider Link State Bridging," the content of which is hereby incorporated herein by reference. As described in greater detail in that application, the nodes in a link state protocol controlled Ethernet network exchange hello messages to learn adjacencies of other nodes on the network (100), and transmit link state advertisements to enable each node on the network to build a link state database (102). The link state database may be used to compute shortest paths through the network. Each node then populates a Forwarding Information Base (FIB) which will be used by the node to make forwarding decisions so that frames will be forwarded over the computed shortest path to the destination. Since the shortest path to a particular destination is always used, the network traffic will be distributed across a larger number of links and follow a more optimal path for a larger number of nodes than where a single Spanning Tree or even multiple spanning trees are used to carry traffic on the network.

Link state protocol controlled Ethernet networks generally provide best effort service, in which network elements provide no guarantee that a particular frame will be transmitted across the network, merely that it will be forwarded on the shortest path between any two points. That is, the network elements on a link state protocol controlled Ethernet network do not reserve portions of the bandwidth for particular traffic, but rather transmit traffic on a path assigned on the basis of available physical capacity without considering the actual traffic matrix imposed on the network. This means that any mismatch between offered load and physical network build can result in congestion. When congestion occurs on the network, traffic will be dropped in transit and will need to be re-sent or, where resending is not possible due to application constraints, the application itself is degraded. While service of this nature is acceptable for many applications, some subscribers may wish to be able to augment their service via the purchase of dedicated connectivity through the network. Additionally, in a link state protocol controlled Ethernet network, all traffic is sent on shortest paths through the network which, in particular circumstances, can cause overloading of particular nodes and/or links on the network. Accordingly, providers would find it advantageous to selectively enable paths to be defined that are able to follow routes other than the shortest paths in a link state protocol controlled Ethernet network.

### SUMMARY OF THE INVENTION

Traffic engineered paths may be created in a link state protocol controlled Ethernet network by causing the paths to be signaled using link state advertisements and causing the nodes on the Ethernet network to install forwarding state for the traffic engineered paths. The traffic engineered paths may be defined as series of nodes, links, or nodes and links, which are to be used to carry traffic through the network. When the paths are exclusive for a given service instance, the nodes on the network may also remove other state information associated with that service instance, such as multicast state information, so that all traffic associated with the particular service instance will be carried on the TE path.

Traffic engineered paths may be used for unicast traffic between a pair of nodes or may be used to carry both unicast and multicast traffic between a pair of nodes. The traffic engineered paths may be all encompassing, in which they carry all traffic between the nodes and offer resiliency with service guarantees, or may be backed up by best efforts service carried along the shortest path between the nodes. Each traffic engineered path may be associated with one or more service identifiers such as the 802.1ah I-SID where the service instances identified by the I-SID values are also common to best effort connectivity. This permits a mix of traffic engineering and best effort connectivity to be associated with a service in a seamless fashion. The path definition and associated service identifiers (such as the I-SID) are transmitted to the network nodes via a link state advertisement or may be signaled using a signaling protocol such as GMPLS augmented to carry I-SID information, to enable the nodes on the link state protocol controlled Ethernet network to selectively install state if on the traffic engineered path through the network and to recognize, when there is a choice of connectivity, that the traffic engineered path supersedes the best effort path And where the application requires multicast traffic to also be carried on the engineered path, not to install best effort multicast connectivity between the particular pair of nodes for given service instance. In this case the distribution of the traffic matrix in a network may be selective modified, either for the purpose of network engineering, or to selectively add additional service guarantees to a LAN service instance.

### BRIEF DESCRIPTION OF THE DRAWINGS

Aspects of the present invention are pointed out with particularity in the appended claims. The present invention is illustrated by way of example in the following drawings in which like references indicate similar elements. The following drawings disclose various embodiments of the present invention for purposes of illustration only and are not intended to limit the scope of the invention. For purposes of clarity, not every component may be labeled in every figure. In the figures:
Figs. 1 and 2 are functional block diagrams of example link state protocol controlled Ethernet networks;
Figs. 3-6 illustrate how forwarding state may be installed on the network of Fig. 2 to enable unicast, multicast, and traffic engineering state to be installed to forward traffic on the network according to an embodiment of the invention;

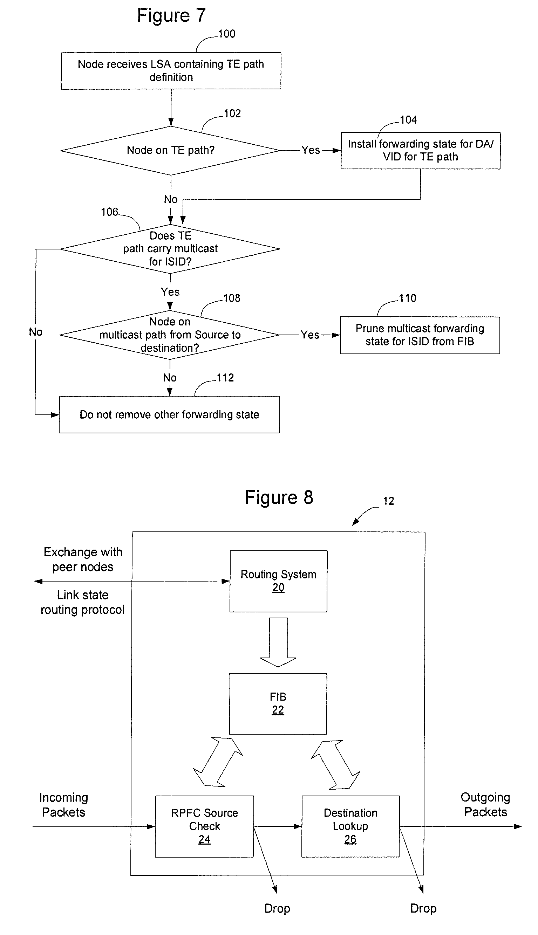

Fig. 7 is a flow chart illustrating a process used to paths on a link state protocol controlled Ethernet network according to an embodiment of the invention; and
Fig. 8 is a functional block diagram of network element that may be used in a link state protocol controlled Ethernet network.

### DETAILED DESCRIPTION

Using a link state protocol to control an Ethernet network enables the Ethernet network to be scaled from the LAN space to the WAN or provider network space by providing more efficient use of network capacity with loop-free shortest path forwarding. Rather than utilizing a learned network view at each node by using the Spanning Tree Protocol (STP) algorithm combined with transparent bridging, in a link state protocol controlled Ethernet network the bridges forming the mesh network exchange link state advertisements to enable each node to have a synchronized view of the network topology. This is achieved via the well understood mechanism of a link state routing system. The bridges in the network have a synchronized view of the network topology, have knowledge of the requisite unicast and multicast connectivity, can compute a shortest path connectivity between any pair of bridges in the network, and individually can populate their forwarding information bases (FIBs) according to the computed view of the network.

When all nodes have computed their role in the synchronized view and populated their FIBs, the network will have a loop-free unicast tree to any given bridge from the set of peer bridges; and a both congruent and loop-free point-to-multipoint (p2mp) multicast tree from any given bridge to the same set of peer bridges per service instance hosted at the bridge. The result is the path between a given bridge pair is not constrained to transiting the root bridge of a spanning tree and the overall result can better utilize the breadth of connectivity of a mesh.

Link state protocol controlled Ethernet networks provide the equivalent of Ethernet bridged connectivity, but achieve this via configuration of the network element FIBs rather than by flooding and learning. As such it can be used by emerging standards such as IEEE (Institute of Electrical and Electronics Engineers) 802.1 ah draft standard entitled Provider Backbone Bridges (PBB) or MAC-in-MAC with configured forwarding of B-MACs (Backbone MAC) and trivial modifications to the PBB adaptation function, to map client broadcast behavior to multicast, such that client Ethernets can utilize the connectivity offered by the link state protocol controlled Ethernet network without modification. MAC configuration may be used to construct shortest path loop-free connectivity (for both unicast and multicast purposes) between a set of (slightly modified) 802.1ah provider backbone bridges in order to provide transparent LAN service to the C-MAC (Customer MAC) layer or other layer networks that can use a transparent LAN service.

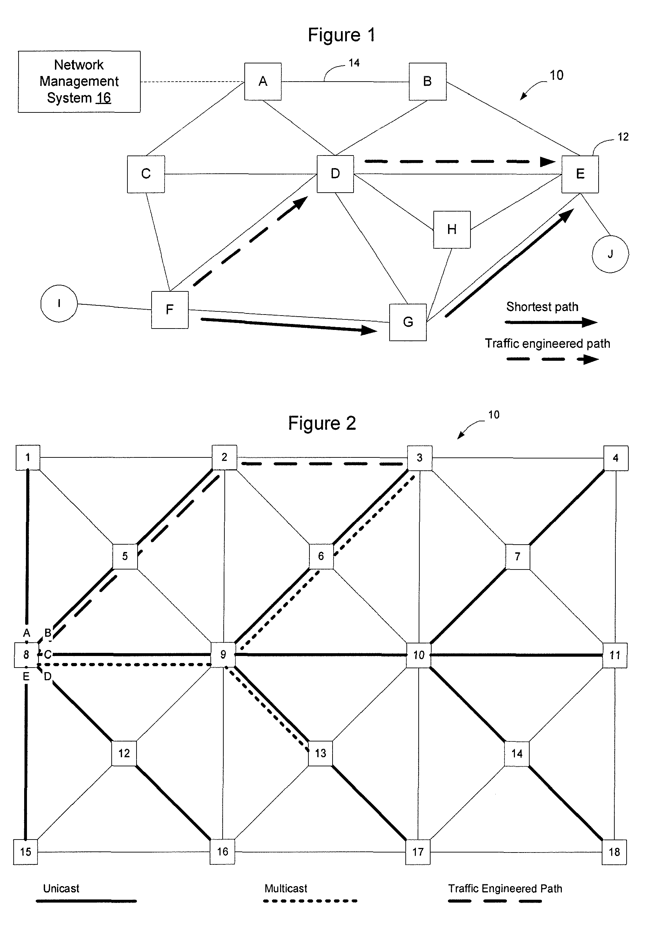

Fig. 1 is a functional block diagram of an example of a portion of a link state protocol controlled Ethernet network 10. As shown in Fig. 2, the network 10 in this example includes a plurality of network elements 12, interconnected by links 14. As shown in Fig. 1, the network elements 12 exchange hello messages to learn adjacencies of other network elements, and exchange link state advertisements to enable each node to build a link state database that may be used to calculate shortest paths between ingress and egress nodes through the network. Additional details associated with an example link state protocol controlled Ethernet network are provided in U.S. Patent No. 11/537,775, entitled "Provider Link State Bridging" the content of which is hereby incorporated herein by reference.

Two examples of link state routing protocols include Open Shortest Path First (OSPF) and Intermediate System to Intermediate System (ISIS), although other link state routing protocols may be used as well. ISIS is described, for example, in ISO 10589, and IETF RFC 1195, the content of each of which is hereby incorporated herein by reference. Although there are current versions of this protocol, the invention is not limited to an implementation based on the current version of the standard as it may be adapted to work with future versions of the standard as they are developed. Similarly, the invention is not limited to an implementation that operates in connection with this particular protocol as other protocols may be used to exchange routing information as well.

In addition to installing shortest path forwarding state, the nodes may also install forwarding state for multicast trees on the network. An example of a way to implement multicast in a link state protocol controlled Ethernet network is described in greater detail in U.S. Patent Application No. 11/702,263 attorney docket No. 18320ROUS04I, entitled "Multicast Implementation in a Link State Protocol Controlled Ethernet Network" the content of which is hereby incorporated herein by reference. As described in that application, link state advertisements may be used to advertise multicast membership to cause forwarding state for a multicast to be installed on the network. In particular, each physical or logical multicast may be assigned a destination MAC Address (DA) that is used to forward the frames on the network. The nodes on the network install forwarding state for the multicast if they happen to be on a shortest path from the multicast source to one of the destination nodes advertising via linkstate "interest" in the multicast. In operation, when an interior node receives a frame it will perform a lookup in its Forwarding Information Base based on the destination address (DA) and VID and forward the frame accordingly.

Traffic engineering may be used to create paths that do not necessarily follow only the shortest path on a provider network such as a provider backbone network. Provider backbone networks may be used to interconnect link state protocol controlled Ethernet networks. For example, one way of creating traffic engineered paths in a provider backbone network is described in U.S. Patent application No. 10/818,685, entitled "Traffic Engineering in Frame-Based Carrier Networks," the content of which is hereby incorporated by reference. As described in greater detail in that application, it is possible to create traffic engineered paths through the backbone network to enable traffic to be routed across a particular path through the provider backbone network between different link state protocol controlled Ethernet networks. The way this works, in the provider backbone, is that a network management station defines the paths that are to be created through the network, and the paths are established on the network elements using a signaling protocol such as Network to Network Interface (NNI). Once the paths have been created, Virtual LAN ID (VID) tags are then used to identify traffic to the interior nodes so that the interior nodes are able to route traffic over the appropriate TE path.

According to an embodiment of the invention, traffic engineered paths may be created on link state protocol controlled Ethernet network as well, to enable explicit routes to be created through the network. The traffic engineered paths may use a different VID so that frames on the TE path are able to be distinguished from frames that are to be forwarded over shortest paths to the destination. Nodes along the path will install forwarding state for the TE path so that when a frame arrives with the DA/VID associated with the TE path the frame will be forwarded along the TE path to the destination.

The network management system 10 may be used to compute traffic engineered paths through the network or, alternatively, another process may be used to define the paths. Network management systems are well known and the invention is not limited to the use of a particular type of network management system. Additionally, although the illustrated network management system is shown as a separate network element, in practice the network management system may be a standalone device that is connected to the network, may be implemented as a process running on one or more of the network elements, or may be implemented as a process running in connection with other network services. Thus, the invention is not limited by the particular manner in which the network management system is implemented as many different ways of implementing the network management system will be apparent to a person of skill in the art.

Once the intended routing of a path has been defined, one or more link state advertisements or signaling transactions may be used to cause the nodes on the network to install forwarding state in their FIBs so that frames addressed using the DA/VID for the TE path will be forwarded along the defined path. Specifically, the network management system may itself generate a link state advertisement and pass the link state advertisement onto the network or, alternatively, the network management system may cause one of the other nodes on the path, such as the node F associated with the source of the traffic engineered path, to generate and transmit a link state advertisement on the network.

The TE paths may be defined in any desired manner. For example, the path may be defined using a series of node IDs, link IDs, or combination of node and link IDs and the invention is not limited to the particular manner in which the path is identified to the network elements. The link state advertisement, in this embodiment, may include information about the path, such as a list of nodes, links, or nodes and links, that are to be used to form the path, and any attributes of the path. Path attributes may include quality of service, guaranteed bandwidth parameters, a flag indicating whether the TE path is to be all encompassing, and other parameters commonly associated with traffic engineered paths.

Fig. 2 illustrates an example communication network in which unicast forwarding, multicast forwarding, and traffic engineered paths are implemented. Different VIDs may be used to differentiate frames addressed to the same destination on the network, so that the frames will be forwarded by the network nodes according to the forwarding state for the DA/VID as determined from the frame header.

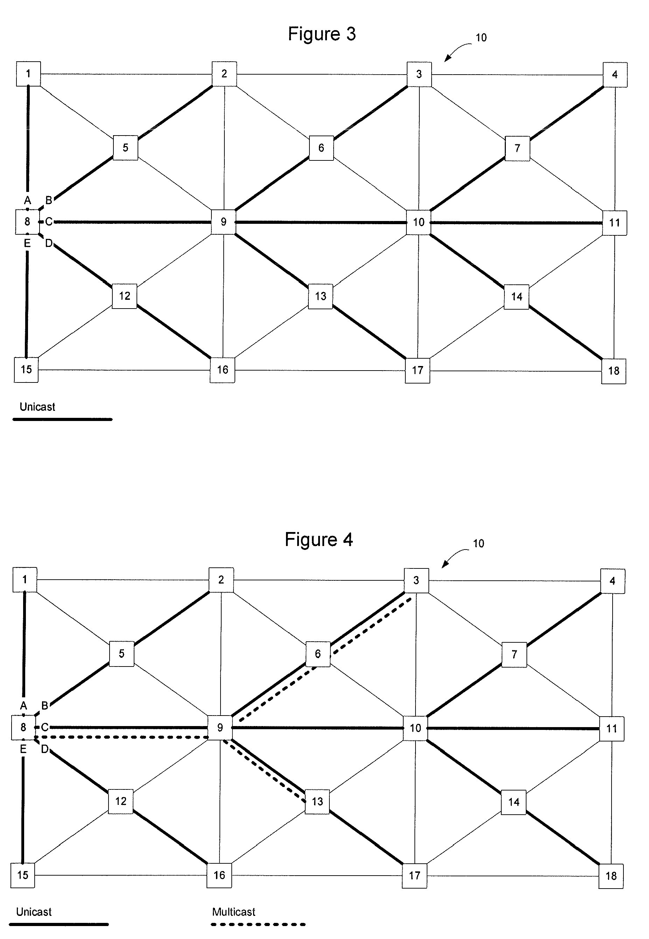

As described above, the nodes on the network will exchange link state advertisements to enable the nodes to build link state databases. Each node on the network will use this link state database to determine the shortest path to each other node on the network. The node will then install forwarding state so that unicast frames on the network will follow the shortest path from the node to the destination. Thus, in the example network shown in Fig. 2, node 8 will determine a shortest path from itself to all other nodes. The shortest path is represented by the solid black lines in Fig. 2, and is shown in isolation in Fig. 3. Shortest path forwarding may be associated with a unique VID so that all traffic to be forwarded to destinations along shortest paths may be identified using the same VID. Node 8 will thus install forwarding state in its Forwarding Information Base to associate the DA/shortest path VID with a particular forwarding action. The following table is an example of the type of information that may be contained in the FIB of node 8 in the example network of Fig. 3. Note, that it will be assumed in this table that VID#1 is associated with shortest path forwarding on the network:

| DA/VID | Output port/interface |
|---|---|
| Node 1 / VID#1 | Port A |
| Node 2 / VID#1 | Port B |
| Node 3 / VID#1 | Port C |
| Node 4 / VID#1 | Port C |
| Node 5 / VID#1 | Port B |
| Node 6 / VID#1 | Port C |
| Node 7 / VID#1 | Port C |
| Node 9 / VID#1 | Port C |
| Node 10 / VID#1 | Port C |
| Node 11 / VID#1 | Port C |
| Node 12 / VID#1 | Port D |
| Node 13 / VID#1 | Port C |
| Node 14 / VID#1 | Port C |
| Node 15 / VID#1 | Port E |
| Node 16 / VID#1 | Port D |
| Node 17 / VID#1 | Port C |
| Node 18 / VID#1 | Port C |

Of course, the actual forwarding information base would contain values appropriate for the particular network. This table is intended to show conceptually the type of information that would be contained in the FIB of node 8 rather than show actual FIB values. Fig. 3 shows the shortest paths through the network that will be taken by frames unicast from node 8, or broadcast from node 8.

If a unicast frame identified with VID#1 was received by node 8 from node 15, node 8 would look at the destination address (DA) of the frame and use the table set forth above to forward the frame to the correct destination. Thus, for example, if node 8 received a frame from node 15 addressed to node 1, node 8 would perform a lookup in its FIB and output the frame over port A.

As mentioned above, in addition to unicasting frames, it is often desirable to enable frames to be multicast to multiple destinations on the network. One way to do this is to define a multicast destination address per source per community of interest, and then cause the nodes on the network to install forwarding state for the multicast address such that, when a multicast frame is received, the node will be able to forward the frame using the destination address of the multicast frame. The multicast tree from a given node will be congruent with the unicast tree to a given node, as is noted in U.S. Patent Application No. 11/537,775, which is advantageous in that both share a common VID such that the MAC learning portion of bridging can be adapted as a loop suppression mechanism.

One way to cause the nodes on the network to install state for a multicast is to advertise service instances associated with the multicast, and cause the intermediate nodes to install forwarding state for the multicast DA/multicast VID if they are on a shortest path between two end nodes that are associated with the same service instance (identified via the ISID). For example, as shown in Fig. 2, assume that node 8 is a source of a multicast associated with a service instance (ISID) and that nodes 3 and 13 have both advertised an interest in that ISID. Advertising membership in a multicast may be performed using a link state advertisement, which will cause the intermediate nodes to add an entry to their link state database that the destination node which sent out the link state advertisement is interested in a particular service instance (ISID).

The intermediate nodes, for example node 9, will determine if it is on a shortest path from node 8 to node 13 and from node 8 to node 3, and will therefore install forwarding state for the multicast DA/ Multicast VID so that, if a frame is received with the multicast DA/VID, it will be forwarded toward both nodes 3 and 13. Additional details associated with installation of multicast routes is contained in U.S. patent application No. 11/702,263, filed February 5, 2007, and entitled "Multicast Implementation in a Link State Protocol Controlled Ethernet Network, the content of which is hereby incorporated herein by reference.

Fig. 4 shows the combination of unicast and multicast installed state. As described above, since both unicast and multicast frames follow shortest paths through the network, they may use the same VID.

According to an embodiment of the invention, TE paths may also be defined through the network which are not required to follow the shortest path. The TE paths may be signaled or advertised using link state advertisements. The TE paths may be identified with a different VID, however, so that traffic that is intended to follow the TE path may be distinguished from traffic that is addressed to the same destination address (DA) but is required to follow the shortest path through the network to that destination. By using different VIDs to identify the TE traffic and the best efforts traffic, the nodes on the network may make different forwarding decisions for frames that are otherwise addressed to the same destination address on the network.

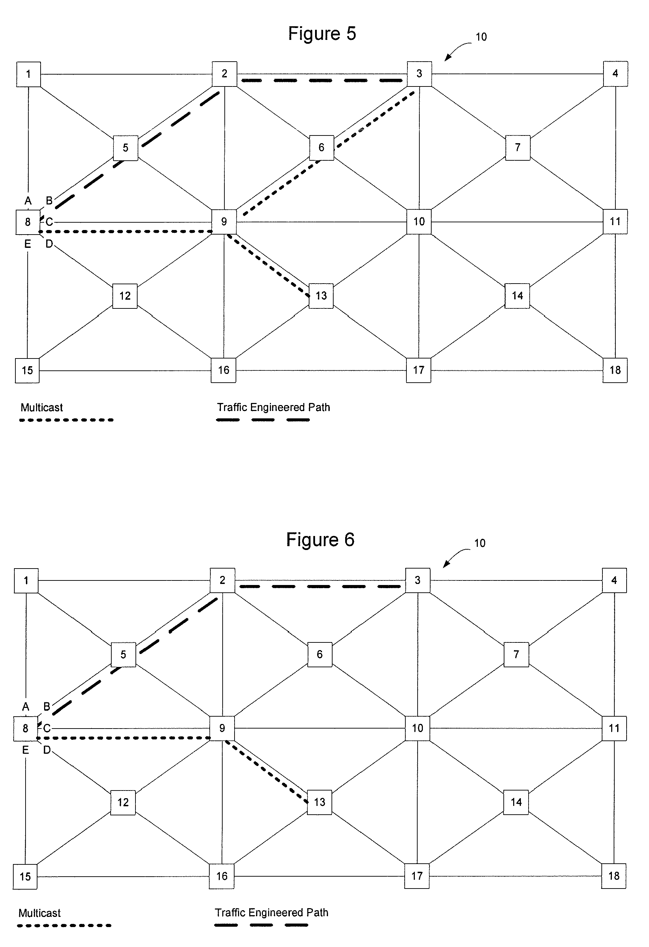

For example, in Fig. 2, assume that a TE path is to be established from node 8 to node 3, via nodes 5 and 2. The nodes on the TE path may install an entry for destination address = 3 and VID#2 so that frames which are received with this identifying information are forwarded along the TE path. Since forwarding on the interior nodes is based on destination address (DA) and VID, frames identified using the VID for TE paths may be forwarded in a different manner than frames identified using the shortest path VID. Fig. 5 illustrates an example in which a multicast has been established having a source at node 8, and destinations and destinations at nodes 3 and 13. Additionally, as shown in Fig. 5, it will be assumed in this example that a TE path has been established between node 8 and node 3. If only unicast traffic for a given service or set of service instances is to be forwarded via the traffic engineered path from node 8 to node 3, the unicast traffic may be sent via the TE path and the multicast traffic may be transmitted via the multicast path in a normal manner, all aspects of adding TE being local decisions at node 8. However, if the TE path is to also carry multicast traffic from node 8 to node 3, node 3 will end up receiving two copies of the multicast traffic. Specifically, node 8 will make a copy of the multicast frames and transmit the frames via the TE path to node 3. Additionally, node 8 will make a copy of the multicast frames and transmit the frames over the best effort multicast path to node 9. Node 9 will then duplicate the frames and send a copy to both node 13 and node 3 (via node 6). Accordingly, where the TE path is configured to carry multicast traffic, duplicate frames may be transmitted to the tunnel endpoint.

To avoid this, according to an embodiment of the invention, portions of the multicast forwarding state may be removed, for example as shown in Fig. 6, to prune portions of the multicast tree that are duplicative of the TE path.

According to an embodiment of the invention, the TE path may be associated with a service instance and the link state advertisement containing the TE path definition may contain an indication as to whether the TE path is to be used exclusively to carry traffic associated with that service instance. If the TE path is to be used exclusively for the service instance, nodes on the network that are on the shortest path from the source to the destination will not install multicast forwarding state for that service instance regardless of whether they are on the shortest path from the source to the destination. Accordingly, the TE paths may be installed instead of other service instance specific paths to enable the TE paths to be exclusive for particular service instances. In a multicast context, the TE paths may be used to replace branches of a multicast tree so that the state installed for a particular multicast is adjusted to prune those branches of the multicast that are duplicated by the TE paths.

There are several ways to cause the multicast forwarding state to be pruned from the network. For example, when the TE path is installed on the network, the end point of the TE path may determine which multicast service instances will be carried by the TE path and, send out an advertisement indicating that it is no longer interested in receiving multicast traffic associated with the service instances. This will cause the interior nodes to prune the branches of the tree that have been installed to enable the multicast to be transmitted to the end node.

As another example of a way in which the multicast forwarding state may be pruned, when a TE path is advertised, the interior nodes on the network may determine whether the TE path is to be used to carry multicast traffic to the end node for a given service instance. When transit nodes process advertisements for the construction of shortest path connectivity, they take the following steps:
- determine the node pairs for which they are on the shortest path
- determine which node pairs have service instances in common (I-SIDs)
- determine which of those node pairs have TE trunks between them for the same set of I-SIDs and prune them from the set requiring best effort connectivity
- install best effort forwarding entries for the remainder

In the example above it is assumed that the previous FIB is superseded such that a-priori entries made redundant by addition of TE connectivity are effectively removed.

For example, in Fig. 5, intermediate node 6 may receive a link state advertisement indicating that a traffic engineered path is to be established from node 8 to node 3. Node 6 will know from the LSA that it is not on the traffic engineered path and, accordingly, not need to install forwarding state for the traffic engineered path. However, node 6 will determine that it is on the shortest path from node 8 to node 3 and, hence, that it may need to remove forwarding state for multicasts between these two nodes. Accordingly, node 6 will determine if the tunnel is to be used to carry multicast frames between the end points. If so, node 6 will determine whether node 6 has advertised membership in any multicasts originating at node 8. If the TE path LSA indicates that the TE path is to carry multicast frames, the intermediate node will thus remove any multicast forwarding state that is required only to forward multicast frames to the end node. An example of how the multicast would be pruned is shown in Fig. 6, in which the branch of the multicast between nodes 9 and 3 has been removed since that branch of the multicast was only installed to forward multicast frames to node 3.

The TE path does not need to carry all traffic between the end nodes and, accordingly, does not need to be the exclusive path through the network between these nodes. Additionally, since the nodes on the network will install forwarding state based on shortest paths through the network for use in connection with unicasting frames through the network, i.e. using unicast VID #1, the best efforts shortest path forwarding may be used to back up the TE path. For example, where the node 8 determines that the TE path is down, it may use the DA of the path endpoint and the unicast VID #1 to forward frames toward the DA over the shortest path through the network. Where the path is exclusive, however, this will not work for multicast traffic since the interior nodes will not have installed state to enable traffic addressed to the multicast DA to reach the path endpoint. In this instance, the ingress node (node 8 in the illustrated example) may cause all traffic that would ordinarily be carried by the path to be unicast to the path endpoint rather than relying on the multicast to transport traffic to the tunnel endpoint. Thus a multicast frame, in this instance, may be output by the node using both a multicast DA/Multicast VID#2, and with a unicast DA/Unicast VID #1 to cause the data to be transmitted on the multicast tree as well as to cause the data to be unicast to the path endpoint.

The I-SID is a tag that is used to identify flows of traffic on the network, and which is normally only of significance to the edges. In a link state protocol controlled Ethernet network, the ISIDs may also be used in the routing system where the routing system is being used to construct source specific multicast trees per I-SID. According to an embodiment of the invention, the ISIDs may also be associated with TE paths, to differentiate between traffic that is to be forwarded using best effort, multicast, or via the TE path. The ISID in this instance associates connectivity with a service in the control plane, and is used to select the correct VID/DA that will enable the frame to be forwarded over the TE path in the data plane. The TE path is therefore associated with a set of services identified by the I-SID.

Traffic on the traffic engineered path may have the same priority as traffic that is forwarded using the shortest path connectivity, or may be marked with higher priority to increase the likelihood that traffic on the TE path will be forwarded through the network. Optionally, multiple diverse TE paths may be set up through the network, so that traffic may be protection switched from one TE path to the other TE path upon determination of a failure on the network affecting the TE path. Alternatively, shortest path forwarding may be implemented to back up the TE path, should a failure occur on the TE path. Various quality of service and protection options may be selected and grouped together to increase the number of options a network operator may offer customers, so that customers may purchase the type of connectivity they desire from a network service provider.

When a TE path is installed between a pair of nodes on the network, the TE path may supersede all other connectivity between those nodes, such that the transit nodes when installing state will not install other state for multicast trees or best efforts service (shortest path) between those same end-points. This will enable all traffic between the two endpoints to travel over the path rather than over a best efforts shortest path between the two endpoints. Alternatively, the TE path may be used only for unicast traffic between the endpoints and state may continue to be installed by intermediate nodes for multicast traffic between the endpoints.

Optionally a flag may be used to indicate to the intermediate nodes whether the TE path is "all encompassing" or unicast only. If the TE path is all encompassing it may be assumed that the TE path requires protection, since the intermediate nodes will not install state that would enable the intermediate node to forward the traffic between those nodes over a best efforts (shortest path). If the TE path is not all encompassing, however, the intermediate nodes will install state both for the TE path, which will be used for unicast data, and also will install best efforts state along a shortest path between the nodes. If a node/link on the TE path fails, accordingly, the end systems may cause the traffic that would otherwise be forwarded on the TE path to be forwarded across the network according to the best efforts installed state. Thus, in this embodiment the network elements on the network may install both best efforts state and TE path state and the end system may cause traffic to be transported using the best efforts state when the TE path is down.

Fig. 3 shows a process that may be followed by an interior node to install state in a link state protocol controlled Ethernet network where TE paths are allowed to be installed through the network. As shown in Fig. 3, when a link state advertisement containing TE path information is received by an intermediate node on the link state protocol controlled Ethernet network (100), the network element will determine whether it is one of the nodes listed on the traffic engineered path or if it is connected to one of the links linked as belonging to the traffic engineered path (102). If the network element is on the path, and it doesn't already have installed state for the TE path, the node will install forwarding state for the path (104) such that frames addressed using the DA/VID for the TE path will be forwarded along the TE path to the destination.

The node will also determine whether the TE path will carry multicast for a particular multicast service instance (ISID) 106. If the TE path is to be used exclusively for traffic associated with a particular ISID to the TE path destination, other forwarding state that was previously installed that is specific to the ISID and destination should be removed from the FIBs of the interior nodes. Accordingly, the node will determine whether multicast forwarding state should be removed. This may be done using the same process as is performed to determine whether multicast state should be installed in the first instance. Specifically, the node will determine whether the destination node of the TE path has advertised an interest in the ISID associated with the TE path, and if so, whether the node is on a shortest path from the source of the TE path to the destination (108). If the node is on the shortest path it will remove forwarding state for the multicast DA/VID that is associated with the ISID (110) so that the branch of the multicast tree may be pruned in the forwarding plane of the network. If the TE path is not exclusive, forwarding state is not required to be removed from the network and the process will terminate (112).

Of course, at any point during this process, the node may forward the link state advertisement to the other nodes on the network. Forwarding of the link state advertisement will be performed by the node as specified by the link state routing protocol and is not affected by the manner in which the nodes process the data to implement the TE paths as discussed herein.

Thus, where TE paths are used, the multicast trees may be pruned to eliminate branches of the multicast tree that would extend between the same source and destination as are provided by the TE path. Thus, rather than having every node on the network install forwarding state for a multicast tree if it is on the shortest path between a source and destination, the intermediate node will also determine first whether a TE path exists between the source and destination. If the TE path exists between the source and destination the intermediate node will not install forwarding state for the multicast tree even though it otherwise would have been required to install forwarding state based on a shortest path determination described above.

The traffic engineered path may be a best efforts path or, alternatively, may also specify particular quality of service parameters that should be afforded to traffic on the network element. For example, the network management system may specify that the path should be provided with a guaranteed minimum amount of bandwidth, This may be implemented in the network elements by prioritizing pathed traffic, using separate forwarding queues, or in any number of ways. The invention is not limited by the particular manner in which the network elements are configured to actually provide the differentiated quality of service to the traffic on the TE path.

In the previous example it was assumed that all traffic on the path (e.g. all traffic with a particular destination address and VID value) should be transmitted to the path endpoint. This may not be the case in all situations. For example, a path may be set up to carry traffic only for a particular Virtual Private Network between a particular source and destination. To prevent other traffic from being forwarded on the TE path, i.e. traffic originating at an intermediate node on the TE path, the network elements may perform a source MAC address check, similar to a Reverse Path Forwarding Check (RPFC) to determine if the traffic is from the correct source MAC address. If the traffic did not originate at the correct source, the traffic may be prevented from being forwarded on the traffic engineered path. In this instance the traffic may be dropped or may be forwarded to the destination over the shortest path to the destination.

The network management system may use many types of information when computing paths through the network. For example, the network management system may consider the capacity of the links/nodes, the speed, usage and availability, or other common metrics when determining paths through the network. Optionally, when computing a primary path, a secondary path may be signaled as well, so that fast reroute paths may be installed should one or more nodes/links on the primary path through the network fail. The fast reroute alternatives may be advertised in the same link state advertisement as the original traffic engineered path or may be advertised at a subsequent time and installed onto an established path.

Transmitting traffic engineered path information using IS-IS, OSPF, or another link state routing protocol link state advertisement, enables traffic engineered paths to be established using a signaling mechanism that is already in use on the network. Thus, no additional signaling mechanism is required to be implemented to enable the traffic engineered paths to be instantiated on the network elements. The link state advertisement will be forwarded over the network to all nodes on the network to enable the nodes to update their link state databases.

The MAC addresses associated with a bridge (unicast and multicast) are global to the link state protocol controlled Ethernet network and are used for destination based forwarding. This means they can be simply flooded in routing system advertisements and, upon local convergence of the routing system, can be instantiated in the local bridge forwarding database (or FIB) as directed by the routing system. In this way distributed computation of layer 2 connectivity can be applied to Ethernet bridges without requiring a distinct signaling system to associate connectivity with topology.

It should be understood that although a single unicast MAC address per bridge has been described, nothing precludes the use of finer granularity, and a unicast MAC address may refer to a line card, a virtual switch instance (VSI) or UNI port. This may be desirable to simplify de-multiplexing of flows at a destination bridge.

Loop suppression is required in the network to maintain connectivity (albeit in a potentially degraded form) during periods of instability (the period between a topology change, advertisement of the topology change by the routing system to all bridges in the network, and re-convergence on a common view of the new topology and corresponding update of forwarding information). Instability in a distributed system frequently means that, at least temporarily, the overall view of the network will not be synchronized. Where the network elements do not have a synchronized view of the network it is possible for transitory loops to be formed. Link state protocol controlled Ethernet networks may use Reverse Path Forwarding Checks to minimize loops. RPFC checks may be performed by causing a network element such as an Ethernet bridge to check frames by comparing the Source MAC address contained in the frame and the segment on which the frame arrives, with the values that are configured for that same MAC address as a destination in the forwarding database. If the learned segment for the source MAC address would modify a static entry, or there is no static entry, then the frame is discarded. RPFC checks may optionally be disabled in particular instances as desired.

Fig. 4 is a schematic representation of a possible implementation of a network element 12 configured to be used in a link state protocol controlled Ethernet network. The network element 12 includes a routing system module 20 configured to exchange information with peer bridges 12 in the network 10 regarding the network topology, multicast trees, and TE paths, using a link state routing protocol. As discussed previously, the exchange of information allows the bridges to generate a synchronized view of the network topology which then allows the routing system 20 module to calculate the shortest path tree during convergence. The network element 12 also includes a FIB 22 that is populated with the appropriate entries for directing traffic through the network based upon the calculated shortest paths, multicast trees, and TE paths.

The network element 12 may also include one or more other modules such as a Reverse Path Forwarding Correction (RPFC) source check module 24 that may be used to process incoming frames and performs a lookup in the FIB 22 to determine if the port over which the frame was received coincides with the port identified in the FIB 22 for the particular Source MAC. If the received port/Source MAC does not match the expected port/Source MAC it may be inferred that the frame has diverged from its path somewhere in the network and should therefore be discarded. If the frame passes the RPFC source check 24 module, or if the check is disabled, a destination lookup 26 module determines from the FIB 22 the port or ports over which the frame should be forwarded. If the FIB doesn't have an entry for the VID, the frame is discarded. t should also be understood that the modules described are for illustrative purposes only and may be implemented by combining or distributing functions among the modules of a bridge node as would be understood by a person of skill in the art.

The functions described above may be implemented as a set of program instructions that are stored in a computer readable memory and executed on one or more processors on the computer platform. However, it will be apparent to a skilled artisan that all logic described herein can be embodied using discrete components, integrated circuitry such as an Application Specific Integrated Circuit (ASIC), programmable logic used in conjunction with a programmable logic device such as a Field Programmable Gate Array (FPGA) or microprocessor, a state machine, or any other device including any combination thereof. Programmable logic can be fixed temporarily or permanently in a tangible medium such as a read-only memory chip, a computer memory, a disk, or other storage medium. Programmable logic can also be fixed in a computer data signal embodied in a carrier wave, allowing the programmable logic to be transmitted over an interface such as a computer bus or communication network. All such embodiments are intended to fall within the scope of the present invention.

It should be understood that various changes and modifications of the embodiments shown in the drawings and described in the specification may be made within the spirit and scope of the present invention. Accordingly, it is intended that all matter contained in the above description and shown in the accompanying drawings be interpreted in an illustrative and not in a limiting sense. The invention is limited only as defined in the following claims and the equivalents thereto.

### STATEMENTS OF INVENTION

1. A method of installing forwarding state for a traffic engineered path in network element operating in a link state protocol controlled Ethernet network, the method comprising the steps of:
   establishing, by the network element, a link state database containing information derived from link state advertisements exchanged in connection with the link state protocol by the network elements operating in the link state protocol controlled Ethernet network;
   installing shortest path forwarding state to destinations on the link state protocol controlled Ethernet network into a Forwarding Information Base, the shortest path forwarding state being computed from information contained in the link state database or derived from the link state database;
   receiving, by the link state protocol controlled Ethernet node, a traffic engineered path definition, the traffic engineered path definition comprising a list of links and/or nodes defining the traffic engineered path through the network; and
   installing traffic engineering forwarding state into the Forwarding Information Base for the traffic engineered path to enable the node to forward traffic associated with the traffic engineered path on a link along the defined traffic engineered path.
2. The method of claim 1, wherein the traffic engineering path definition is contained in a link state protocol link state advertisement.
3. The method of claim 1, wherein the traffic engineering path definition is conveyed via signaling.
4. The method of claim 1, wherein the traffic engineered path definition comprises a list of links and/or nodes.
5. The method of claim 1, wherein the shortest path forwarding state is associated with a first Virtual LAN ID tag (VID), and wherein the traffic engineering forwarding state is associated with a second VID.
6. The method of claim 5, wherein the Forwarding Information Base may include traffic engineering forwarding state entry for a Destination Address and different shortest path forwarding state entry for the same Destination Address.
7. The method of claim 5, wherein the shortest path forwarding state includes forwarding state for multicast destination addresses.
8. The method of claim 7, further comprising the step of removing at least one shortest path forwarding state entry from the Forwarding Information Base associated with a multicast addresses in connection with installing the traffic engineering forwarding state.
9. A link state protocol controlled Ethernet network, comprising:
   a plurality of nodes interconnected by a plurality of links, the plurality of nodes being configured to implement the link state protocol to enable the nodes to construct and install shortest path forwarding state through the Ethernet network;
   wherein the nodes are further configured to exchange link state advertisements containing traffic engineering path definitions and to install traffic engineering path forwarding state to enable traffic engineered paths to be established on the link state protocol controlled Ethernet network.
10. The link state protocol controlled Ethernet network of claim 9, wherein the shortest path forwarding state is associated with a first Virtual LAN ID tag (VID) and the traffic engineering path definitions are associated with a second VID.
11. The link state protocol controlled Ethernet network of claim 10, wherein the first VID is associated with unicast connectivity through the network and multicast connectivity through the network.
12. The link state protocol controlled Ethernet network of claim 11, wherein the nodes are further configured to selectively uninstall multicast connectivity forwarding state associated with the first VID in conjunction with installing traffic engineering forwarding state associated with the second VID.
13. The link state protocol controlled Ethernet network of claim 9, wherein the shortest path forwarding state may be used to forward frames through the network when one of the links or nodes on the traffic engineering path is experiencing failure.
14. The link state protocol controlled Ethernet network of claim 9, wherein the link state advertisements are configured to contain traffic engineering path definitions defining redundant traffic engineering paths, a first of the paths being a primary path and a second of the paths being a backup path, wherein the nodes are configured to install primary path forwarding state for the primary path and are configured to install backup path forwarding state for the backup path, and wherein the backup path forwarding state may be used to forward frames through the network when one of the links or nodes on the primary path is experiencing failure.
15. The link state protocol controlled Ethernet network of claim 9, wherein a node on an ingress edge of the traffic engineering path is configured to mark frames forwarded over the traffic engineering path with a higher priority of service than a priority of service associated with frames forwarded using the shortest path forwarding state.
16. A method of selectively updating forwarding state in a forwarding information base of a network element, the method comprising the steps of:
   installing unicast and multicast shortest path forwarding state into the forwarding information base of the network element;
   receiving a link state advertisement containing a traffic engineering path definition specifying a traffic engineered path between a first node on a link state protocol controlled Ethernet network and a second node on the link state protocol controlled Ethernet network;
   determining if the network element is on a shortest path between the first node and the second node;
   determining if the traffic engineering path definition requires the traffic engineered path to carry multicast frames between the first node and second node; and
   if the network element is on the shortest path between the first and second nodes, and the traffic engineered path definition indicates that the traffic engineered path is to carry multicast frames between the first and second nodes, pruning multicast shortest path forwarding state for multicast trees established between the first and second nodes from the forwarding information base.
17. The method of claim 16, wherein the multicast trees are associated with ISID values, and wherein the step of pruning shortest path multicast forwarding state comprises determining which ISID values are common between the first and second nodes.
18. The method of claim 16, further comprising the step of installing forwarding state for the traffic engineered path into the forwarding information base.
19. The method of claim 18, wherein the shortest path forwarding state is associated with a shortest path Virtual LAN ID (VID), and wherein the forwarding state for the traffic engineered path is associated with a traffic engineering VID.
20. The method of claim 19, wherein the forwarding information base may contain two entries for a given destination address, one of the two entries being associated with the shortest path VID and a second of the two entries being associated with the traffic engineering VID.

## Claims

1. A method of selectively updating forwarding state in a forwarding information base of an Ethernet network element, the method comprising the steps of:
installing, by a link state routing protocol process, unicast and multicast shortest path forwarding state into the forwarding information base of the Ethernet network element;
receiving, by the link state routing protocol process, a link state routing protocol link state advertisement containing a traffic engineering path definition specifying a traffic engineered path between a first node on a link state protocol controlled Ethernet network and a second node on the link state protocol controlled Ethernet network, the traffic engineered path definition comprising a list of links and/or nodes defining the traffic engineered path through the link state protocol controlled Ethernet network;
determining, by the link state routing protocol process, if the network element is on a shortest path between the first node and the second node;
determining, by the link state routing protocol process, if the traffic engineering path definition requires the traffic engineered path to carry multicast frames between the first node and second node; and
if the network element is on the shortest path between the first and second nodes, and the traffic engineered path definition indicates that the traffic engineered path is to carry multicast frames between the first and second nodes, pruning, by the link state routing protocol process, multicast shortest path forwarding state for multicast trees established between the first and second nodes from the forwarding information base.

2. The method of claim 1, wherein the multicast trees are associated with service instance identifier, ISID, values, and wherein the step of pruning shortest path multicast forwarding state comprises determining which ISID values are common between the first and second nodes.

3. The method of claim 1, further comprising the step of installing forwarding state for the traffic engineered path into the forwarding information base.

4. The method of claim 3, wherein the shortest path forwarding state is associated with a shortest path Virtual LAN ID, VID, and wherein the forwarding state for the traffic engineered path is associated with a traffic engineering VID.

5. The method of claim 4, wherein the forwarding information base contains two entries for a given destination address, one of the two entries being associated with the shortest path VID and a second of the two entries being associated with the traffic engineering VID.

6. A network element for a routed network, the network element being adapted to selectively updating forwarding state in a forwarding information base, the network element comprising:
at least one processor; and
at least one storage element storing instructions for execution by the at least one processor, the instructions comprising instructions executable by the at least one processor:
to install, by a link state routing protocol process, unicast and multicast shortest path forwarding state into the forwarding information base of the network element;
to receive, by the link state routing protocol process, a link state routing protocol link state advertisement containing a traffic engineering path definition specifying a traffic engineered path between a first node on the routed network and a second node on the routed network, the traffic engineered path definition comprising a list of links and/or nodes defining the traffic engineered path through the routed network;
to determine, by the link state routing protocol process, if the network element is on a shortest path between the first node and the second node;
to determine, by the link state routing protocol process, if the traffic engineering path definition requires the traffic engineered path to carry multicast frames between the first node and second node; and
if the network element is on the shortest path between the first and second nodes, and the traffic engineered path definition indicates that the traffic engineered path is to carry multicast frames between the first and second nodes, pruning, by the link state routing protocol process, multicast shortest path forwarding state for multicast trees established between the first and second nodes from the forwarding information base.

7. The network element of claim 6, wherein the multicast trees are associated with service instance identifier, ISID, values, and wherein the step of pruning shortest path multicast forwarding state comprises determining which ISID values are common between the first and second nodes.

8. The network element of claim 6, further comprising the step of installing forwarding state for the traffic engineered path into the forwarding information base.

9. The network element of claim 8, wherein the shortest path forwarding state is associated with a shortest path Virtual LAN ID, VID, and wherein the forwarding state for the traffic engineered path is associated with a traffic engineering VID.

10. The network element of claim 9, wherein the forwarding information base contains two entries for a given destination address, one of the two entries being associated with the shortest path VID and a second of the two entries being associated with the traffic engineering VID.
